(19) Europäisches Patentamt

European Patent Office

Office européen des brevets

(11) **EP 1 338 564 A2**

(12) **EUROPEAN PATENT APPLICATION**

(43) Date of publication:
27.08.2003 Bulletin 2003/35

(51) Int Cl.⁷: **C01G 23/053**

(21) Application number: 03251069.5

(22) Date of filing: 21.02.2003

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: 25.02.2002 JP 2002047713

(71) Applicant: **Sumitomo Chemical Co.,Ltd.
Osaka 541-8550 (JP)**

(72) Inventors:
• **Okusako, Kensen
Niihama-shi, Ehime (JP)**
• **Ando, Hiroyuki
Niihama-shi, Ehime (JP)**

(74) Representative: **Cresswell, Thomas Anthony
J.A. KEMP & CO.
14 South Square
Gray's Inn
London WC1R 5JJ (GB)**

(54) **Titanium oxide precursor and production method thereof, and production method of titanium oxide using the precursor**

(57) A titanium oxide precursor which is used for producing a fine-particle titanium oxide showing a high photocatalytic activity is provided. The titanium oxide precursor is an oxygen-atom-containing titanium compound other than anatase-form titanium oxide, and has a maximum exothermic peak at a temperature in the range of from about 30°C to about 500°C in a differential thermal analysis curve and shows decrease in weight in a thermogravimetry curve at about the same temperature at which the maximum exothermic peak is shown in the differential thermal analysis curve when subjected to a thermogravimetry and differential thermal analysis under the condition of a temperature rising rate of 20°C/min.

EP 1 338 564 A2

Printed by Jouve, 75001 PARIS (FR)

**Description**

FIELD OF THE INVENTION

The present invention relates to a titanium oxide precursor and a production method thereof, and a production method of a titanium oxide using the precursor.

BACKGROUND OF THE INVENTION

A photocatalyst which shows a catalytic activity by irradiation of a visible light was found, and many production methods of the photocatalyst have been proposed. For example, publication WO 00/10706 discloses a method for obtaining a photocatalyst by hydrogen plasma treatment or rare-gas-element plasma treatment of titanium oxide. However, the method disclosed in the publication has problems such that the method requires a specific apparatus having a vacuum vessel, such as a plasma treatment apparatus and the like, which makes the operation complicated.

Recently, other methods for producing a photocatalyst from a titanium oxide, which do not have to use a specific apparatus having a vacuum vessel, are also proposed. Examples thereof are a method comprising the steps of hydrolyzing a tetraisopropoxy titanium, heat treating the resulting product in ammonia gas and calcining the product in the air (Japanese Patent Application Laid-Open No. (JP-A-) 2001-278625); a method comprising the steps of hydrolyzing a tetraisopropoxy titanium, soaking the resulting product in an aqueous ammonia solution and calcining the product (JP-A-2001-278626); a method comprising the step of calcining an oxyoxalic acid titanium ammonium (JP-A-2001-278627); a method comprising the step of calcining a titanium hydroxide in the presence of an ammonium sulfate (JP-A-2001-302241); a method comprising the step of calcining a titanium hydroxide under an ammonia gas atmosphere (JP-A-2001-354422); a method comprising the steps of mixing a titanium compound such as a titanium chloride, a titanium oxychloride, a titanium sulfate and a titanium oxysulfate with a specific amount of ammonia and calcining the resulting mixture (JP-A-2002-47012); and the like.

Among the above-described method, there are some methods including a method in JP-A-2002-47012, which provide a titanium oxide showing a relatively high photocatalytic activity by irradiation of a visible light. However, it is difficult to obtain a small particle size of titanium oxide in such methods, while the small particle size of titanium oxide is desired. A titanium oxide having a small particle size has been desired especially when a film containing a titanium oxide is formed from a coating solution in which the titanium oxide is dispersed in a solvent, since a small size of particle makes possible to provide a thin film and improve the mechanical properties of the film.

SUMMARY OF THE INVENTION

Objects of the present invention include to provide a method for producing a fine-particle titanium oxide which shows a photocatalytic activity, and a titanium oxide precursor which can be used as a raw material for the production method and a method for producing the precursor.

The inventors of the present invention have studied on a method for producing a titanium oxide with a small particle size while maintaining a high photocatalytic activity. As a result, it has been found that a method using a titanium oxide precursor provides a fine-particle titanium oxide having a sufficient photocatalytic activity. Based on such findings, the present invention has been accomplished.

The present invention provides a titanium oxide precursor which is an oxygen-atom-containing titanium compound other than anatase-form titanium oxide, and has a maximum exothermic peak at a temperature in the range of from about 30 °C to about 500 °C in a differential thermal analysis curve and shows decrease in weight in a thermogravimetry curve at about the same temperature at which the maximum exothermic peak is shown in the differential thermal analysis curve when subjected to a thermogravimetry and differential thermal analysis (TG-DTA) under the condition of a temperature rising rate of 20 °C/min.

The present invention also provides a method for producing a titanium oxide precursor, the method comprising the steps of mixing a titanium compound with a hydrogen peroxide and adding a base to the resulting mixture at the temperature of about 80 °C or lower to hydrolyze the titanium compound.

Furthermore, the present invention provides a method for producing a titanium oxide, the method comprising the step of calcining the above-mentioned titanium oxide precursor.

BRIEF DESCRIPTION OF THE DRAWINGS

Fig. 1 is thermogravimetry and differential thermal analysis curves (TG-DTA curve) of a titanium oxide precursor of the present invention (see, Example 1); and

Fig. 2 is thermogravimetry and differential thermal analysis curves (TG-DTA curve) of a titanium oxide precursor (see, Comparative Example 1).

## DETAILED DESCRIPTION OF THE INVENTION

A titanium oxide precursor in the present invention is an oxygen-atom-containing titanium compound other than anatase-form titanium oxide. The titanium oxide precursor can be converted to a titanium oxide (which is represented by composition formula $TiO_2$) when being calcined in air at a temperature of from about 300 °C to about 500 °C. The titanium oxide precursor in the present invention may be an oxygen-atom-containing inorganic titanium compound such as a titanium hydroxide and a titanium peroxide. Examples of the titanium hydroxide include compounds represented by $Ti(OH)_2$, $Ti(OH)_3$, $Ti(OH)_4$, $TiO(OH)_2$ and the like. Examples of the titanium peroxide include a titanium compound mainly composed of a titanium hydroxide in which some Ti-O-H bonds are replaced by Ti-O-O bond, a titanium compound mainly composed of a titanium oxide in which some Ti-O bonds are replaced by Ti-O-O bond, a mixture thereof, for example, a titanium compound represented by formula (2) below:

$$Ti(O_2)_xO_y(OH)_z \qquad (2)$$

[wherein x, y and z are under the conditions of 0<x<4, 0≤y<2 and 0≤z<4] and the like. A titanium oxide precursor in the present invention may be one of the above-mentioned titanium compounds or may be a mixture thereof.
In a thermogravimetry and differential thermal analysis, a titanium oxide precursor in the present invention has a maximum exothermic peak at a temperature in the range of from about 30 °C to about 500 °C in the differential thermal analysis curve and shows decrease in weight in the thermogravimetry curve at about the same temperature at which the maximum exothermic peak is shown in the differential thermal analysis curve. By calcining the titanium oxide precursor showing the decrease in weight at the above-described temperature, a fine particle titanium oxide having a sufficient photocatalytic activity can be obtained. On the other hand, it is difficult to obtain a fine particle titanium oxide by calcining a titanium oxide precursor having an exothermic peak in a differential thermal analysis curve and showing no decrease in weight at about the same temperature at which the maximum exothermic peak is shown. In the present specification, a term "a maximum exothermic peak" means a exothermic peak showing the largest intensity among exothermic peaks in a differential thermal analysis curve. The maximum exothermic peak of a titanium oxide precursor in the present invention is observed preferably at a temperature of not less than about 200°C, and more preferably at a temperature of not not less than about 300 °C, and is observed preferably at a temperature of not more than about 450 °C. The thermogravimetry and differential thermal analysis is an analysis for measuring a calorific (exothermic) value or endothermic value of a sample when being heated while measuring the change in weight of the sample at the same time. The analysis in the present invention is carried out under the condition of a temperature rising rate of 20 °C/min so that the temperature at which the maximum exothermic peak is observed does not vary depending on the temperature rising rate.
A titanium oxide precursor in the present invention preferably has weight-decreasing ratio X of from about 0.1 % by weight to about 5 % by weight (and more preferably, of from about 0.5 % by weight to about 2 % by weight), which is calculated by equation (3) below:

$$X = ( W_2 - W_1 ) \div W_0 \times 100 \qquad (3)$$

wherein $W_0$ is a weight of the titanium oxide precursor before being heated in the thermogravimetry and differential thermal analysis, $W_1$ is a weight of the precursor at a temperature showing the maximum exothermic peak in the differential thermal analysis curve and $W_2$ is a weight of the precursor at a temperature lower by 20 °C than the temperature showing the maximum exothermic peak. When an amorphous titanium hydroxide prepared by a conventionally known method is subjected to the thermogravimetry and differential thermal analysis, an exothermic peak is shown during a phase conversion to an anatase-form titanium oxide in a differential thermal analysis curve, but the weight of the amorphous titanium hydroxide does not substantially change at about the same temperature at which the exothermic peak is shown in the differential thermal analysis curve. Such an amorphous titanium hydroxide may have a weight-decreasing ratio X of less than about 0.1 % by weight.
Preferably, a titanium oxide precursor in the present invention contains nitrogen element and emits nitrogen molecules ($N_2$) at the temperature at which a maximum exothermic peak is observed in the differential thermal analysis curve thereof when subjected to a thermogravimetry and differential thermal analysis. The reason why the fine particle titanium oxide having a high photocatalytic activity is obtained from the titanium oxide precursor which emits nitrogen molecules, is not clear. It is presumed that the precursor contains nitrogen in a specific state, which contributes to the high photocatalytic activity. The presence or absence of the emission of nitrogen molecules can be evaluated, for example, by a differential-thermal-mass spectrum.

Furthermore, a titanium oxide precursor in the present invention preferably has a BET specific surface area of about 100 $m^2$/g or smaller. By using the titanium oxide precursor having a BET specific surface area of about 100 $m^2$/g or smaller, a particulate titanium oxide photocatalyst which has fine particles and is excellent in dispersibility, can be obtained. On the other hand, when the BET specific surface area of the titanium oxide precursor is too small, there may be some possibility of deteriorating the photocatalytic activity of the resulting titanium oxide. Therefore, the BET specific surface area of the titanium oxide precursor is preferably about 10 $m^2$/g or larger.

The titanium oxide precursor in the present invention may be an amorphous oxygen-containing titanium compound or may comprise an amorphous oxygen-containing titanium compound as the main component. The titanium oxide precursor preferably comprises at least 50% by weight, more preferably at least 90% by weight, most preferably at least 95% by weight of an amorphous oxygen-containing titanium compound. The precursor is preferably used as a raw material for producing a titanium oxide photocatalyst. The crystallinity of the titanium oxide precursor can be evaluated by an X-ray diffraction method.

A titanium oxide precursor in the present invention, which shows decrease in weight in a thermogravimetry curve at the temperature around which the maximum exothermic peak is shown in the differential thermal analysis curve, may be produced, for example, by a method comprising the steps of mixing a titanium compound with a hydrogen peroxide and adding a base to the resulting mixture at the temperature of about 80°C or lower to hydrolyze the titanium compound.

Examples of the titanium compound to be used in the above-mentioned method include a titanium chloride, a titanium oxychloride, a titanium sulfate, a titanium oxysulfate and the like. The amount of hydrogen peroxide to be mixed with the titanium compound may be about 0.1 molar time or more, based on titanium contained in the titanium compound. The larger the amount of the hydrogen peroxide to be mixed becomes, the smaller the particle size of the finally obtained titanium oxide becomes, which is preferred. For example, the amount of hydrogen peroxide is preferably about 1 molar times or more, based on titanium contained in the titanium compound. On the other hand, when the amount of the hydrogen peroxide is too large, the photocatalytic activity of the obtained titanium oxide may be deteriorated. Therefore, the amount of the hydrogen peroxide is preferably about 5 molar times or less, based on titanium contained in the titanium compound. The mixing of the titanium compound with the hydrogen peroxide may be carried out at a temperature of about 65 °C or lower, preferably at a temperature of about 60 °C or lower, and more preferably at a temperature of about 55 °C or lower.

The hydrolysis of titanium compound may be carried out by adding a base to the mixture of a titanium compound and a hydrogen peroxide. The base to be used in the hydrolysis includes an ammonia, an amine, an amino acid, a hydroxylamine derivative, a hydrazine derivative and the like. Among them, an ammonia is preferred. The amount of the base to be used may be about 1.2 times or more, preferably about 2 times or more, and may be about 20 times or less, preferably about 10 times or less, based on the stoichiometric amount of the base required to convert the titanium compound into a titanium hydroxide. The hydrolysis may be carried out at a temperature of about 65 °C or lower, preferably at a temperature of about 60 °C or lower, and more preferably at a temperature of about 55 °C or lower.

By calcining the thus-obtained titanium oxide precursor, a titanium oxide which shows sufficient photocatalytic activity by irradiation of visible light and is excellent in dispersibility, can be produced.

The calcination may be carried out at a temperature of about 300 °C or higher, preferably at a temperature of about 320 °C or higher, and may be carried out at a temperature of about 600 °C or lower, preferably at a temperature of about 500 °C or lower. When a titanium oxide is produced by calcining a titanium oxide precursor in the present invention as described above, the titanium oxide precursor is preferably washed with water, ahydrogen peroxide solution, an ammonium nitrate solution, an ammonium carbonate solution or the like prior to the calcination. Furthermore, the washed titanium oxide precursor is preferably dried prior to the calcination. The drying may be carried out at a temperature of about 10 °C or higher, preferably at a temperature of about 70 °C or higher, and may be carried out at a temperature of about 200 °C or lower, preferably at a temperature of about 150 °C or lower. The period of time for drying is not limited and varies depending on the drying temperature. The period of time for drying may be about 1 hour or longer, preferably about 5 hours or longer, and may be within about 24 hours.

The titanium oxide thus obtained in the present invention may be represented by chemical formula $TiO_2$, and may has an average particle size of about 0.5 μm or shorter, preferably about 0.2 μm or shorter, when subjected to dispersion treatment. The main crystalline phase of the titanium oxide may be anatase.

The surface of the obtained titanium oxide is optionally coated with an acidic metal oxide and/or a basic metal oxide. The acidic metal oxide to be used for the coating may be an acidic metal oxide which has a Brønsted acid site, a Lewis acid site or both sites thereof. Examples of the acidic metal oxide include a single-element oxide of a metal such as a zirconium, a hafnium, a vanadium, a niobium, a tantalum, a molybdenum, a tungsten, a manganese, an iron, a cobalt, a nickel, a copper, an aluminum, a gallium, an indium and a tin; a composite oxide of two metals such as a silicon-zinc oxide (which means a mixed oxide of silicon and zinc), a silicon-zirconium oxide, a silicon-magnesium oxide, a silicon-calcium oxide, a silicon-gallium oxide, a silicon-aluminum oxide, a silicon-lanthanum oxide, a silicon-titanium oxide, a titanium-zinc oxide, a titanium-copper oxide, a titanium-zinc oxide, a titanium-aluminum oxide, a titanium-zirconium oxide, a titanium-lead oxide, a titanium-bismuth oxide, a titanium-iron oxide, a zinc-magnesium oxide, a zinc-aluminum oxide, a zinc-zirconium oxide, a zinc-lead oxide and a zinc-antimony oxide. Furthermore, as far as the metal oxide has an acid site, the surface of the titanium oxide can be coated with a composite oxide of three or more kinds of metals. Among these metal oxides, a single-element oxide of a metal such as a zirconium, a vanadium, a niobium, a tantalum, a molybdenum, a tungsten, a manganese, an iron, a cobalt, a nickel, a copper, an aluminum and a tin is preferred. The basic metal oxide to be used for the coating may be a base metal oxide which has a Brensted base site, a Lewis base site or both sites thereof. Examples of the basic metal oxide include a sodium oxide, a potassium oxide, a magnesium oxide, a calcium oxide, a barium oxide, a lanthanum oxide, a cerium oxide, a zinc oxide, a sodium hydroxide, a potassium hydroxide, a magnesium hydroxide, a calcium hydroxide, a barium hydroxide, a lanthanum hydroxide, a cerium hydroxide, a zinc hydroxide, a sodium carbonate, apotassium carbonate, a magnesium carbonate, a calcium carbonate, a barium carbonate, a lanthanum carbonate, a cerium carbonate, a zinc carbonate and the like. The surface of the titanium oxide may be coated with both of the above-mentioned acidic metal oxide and basic metal oxide. Alternatively, the titanium oxide of which surface is coated with the acidic metal oxide may be mixed with and be used together with the titanium oxide of which surface is coated with the basic metal oxide. The amount of the acidic metal oxide and/or the basic metal oxide to be used for the coating is about 50 % by mol or smaller, preferably about 30 % by mol or or smaller and more preferably about 10 % by mol or smaller, based on titanium contained in the titanium oxide to be used as a substrate of which surface is coated.

A titanium oxide in the present invention may be mixed with a polymer resin, a binder, a molding agent, an antistatic agent, an absorbent or the like, and may be molded to a pellet, a fiber, a sheet or the like. It is recommended to use the titanium oxide as a coating agent by mixing with a solvent, since the titanium oxide is excellent in dispersibility in a liquid.

A fine particle titanium oxide in the present invention and a film obtained from a coating agent which is prepared from the titanium oxide both show a high photocatalytic activity by irradiation of a visible light (i.e., a light having a wavelength of form about 430 nm to about 600 nm). The irradiation of visible light can be carried out, for example, by a fluorescent lamp, a halogen lamp, a black light, a xenon lamp, a neon sign, an LED, a marcury-vapor lamp, a sodium vapor lamp or the like. A sun light may also be used.

According to the present invention, a titanium oxide precursor which is suitable for producing a fine particulate titanium oxide is provided. In the present invention, such a titanium oxide precursor is easily produced. By calcining such a titanium oxide precursor, a fine particulate titanium oxide which shows sufficient photocatalytic activity is obtained.

The invention being thus described, it will be apparent that the same may be varied in many ways. Such variations are to be regarded as within the spirit and scope of the invention, and all such modifications as would be apparent to one skilled in the art are intended to be within the scope of the following claims.

The entire disclosure of the Japanese Patent Application No. 2002-047713 filed on February 25, 2002, indicating specification, claims, drawings and summary, are incorporated herein by reference in their entirety.

EXAMPLES

The present invention is described in more detail by reference to the following Examples, which should not be construed as a limitation upon the scope of the present invention.

The physical properties of a titanium oxide precursor and a titanium oxide were evaluated as follows.

Crystallinity: Using an X-ray diffraction apparatus (trade name: RAD-IIA, manufactured by Rigaku Corporation), an X-ray diffraction spectrum was measured under the condition of:

X-ray tube: Cu,
Tube voltage: 40 kV,
Tube current: 35 mA,
Diffusion slit: 1 degree,
Scattering slit: 1 degree,
Light income slit: 0.30 mm,
Sampling width: 0.020 degree, and
Scanning rate: 2.00 degree/min.,

and crystallinity was examined from the obtained spectrum.

Thermogravimetry and differential thermal analysis curves: Using a thermogravimetry and differential thermal analysis measurement apparatus (trade name: Thermoplus II, manufactured by Rigaku Corporation), thermogravimetry and differential thermal analysis curves were obtained under the condition of:

Atmosphere: air,
Temperature: from a room temperature (about 20 °C) to 1000 °C, and
Temperature-rising rate: 20 °C/min.

Differential thermal mass spectrum: Using a differential thermal-mass spectrometry measurement apparatus (trade name: Thermo mass, manufactured by Rigaku Corporation), a differential thermal mass spectrum was obtained under the condition of:

Atmosphere: helium 300 ml/min,
Temperature: a room temperature (about 20 °C) to 600 °C,
Retention time: 5 min,
Temperature-rising rate: 20 °C/min,
Emission current: 1 mA,
CEM voltage: 2000 V,
Sensitivity: AUTO ($7.69 \times 10^{-9}$).
BET specific surface area ($m^2/g$): Using an automated specific surface area measurement apparatus (trade name: Monosorb, manufactured by Yuasa Ionics Inc.), a BET specific surface area was obtained by a nitrogen-adsorption method. The desorption was carried out under vacuum and the condition of retention at 200 °C for 30 min, and the adsorption was carried out at a temperature of 77 K.

Example 1

Preparation of an Aqueous Titanium Oxysulfate Solution:

A titanium oxysulfate (trade name: TM Crystal, appearance: white solid, manufactured by Tayca Corporation) (3388 g) was dissolved in an ion exchanged water (2258 g) to prepare an aqueous titanium oxysulfate solution.

Preparation of Titanium Oxide Precursor:

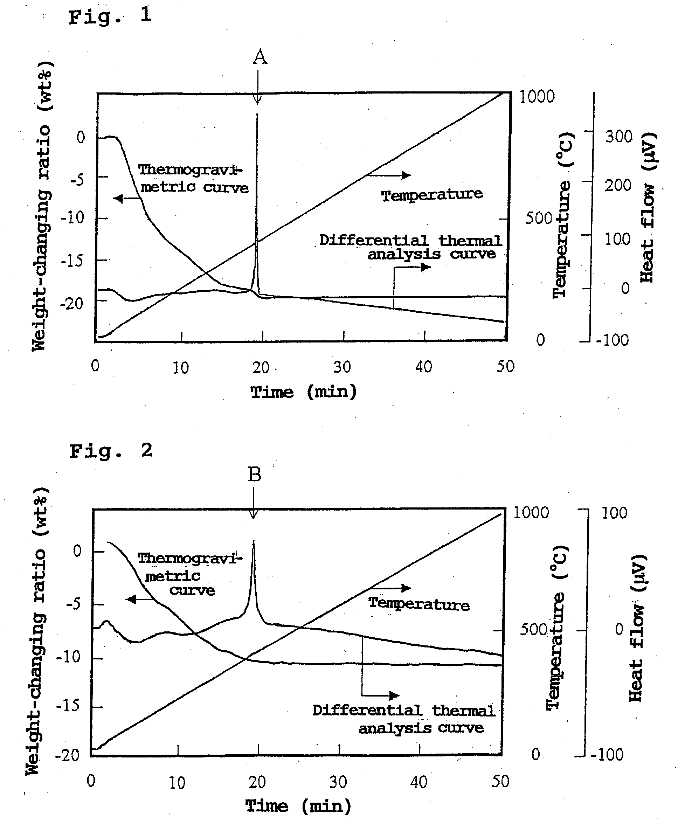

Under ice-cooling, a 35% aqueous hydrogen peroxide (1340 g) was added to the above-prepared aqueous titanium oxysulfate solution to obtain a reddish purple mixed solution. The amount of hydrogen peroxide added was 1.1 molar times based on titanium in the aqueous titanium oxysulfate solution. An ion exchanged water (4700 g) was fed to a reaction vessel equipped with pH electrodes and a pH controller which connects to the pH electrodes and supplies a 25 % by weight of aqueous ammonia (special grade, manufactured by Wako Pure Chemical Industries, Ltd.) so as to adjust the pH of a liquid in the vessel to be constant. The predetermined pH value of the pH controller was set to be 4. The supplying rate of the aqueous ammonia was set to 50.2 ml/min. When a pH value of a liquid in the vessel becomes lower than the predetermined value, the aqueous ammonia is begun to be supplied, and the supplying was continued at the above-mentioned supplying rate until the pH of the liquid attains to the predetermined value. The above-obtained mixed solution was added to the reaction vessel at a rate of 50.4 ml/min, while stirring the resulting liquid in the vessel at 145 rpm, to react with the aqueous ammonium which was supplied to the reaction vessel by the pH controller. The reaction temperature at that time was in a range of from 24 °C to 54 °C. The obtained reaction mixture was maintained for 1 hour with stirring, and then a 25 % by weight of aqueous ammonia (special grade, manufactured by Wako Pure Chemical Industries, Ltd.) was supplied to obtain a slurry. The total amount of the aqueous ammonia supplied to the reaction vessel was 3746 g, which was twice as much as the amount required to convert the titanium oxysulfate into a titanium hydroxide. The slurry was filtered to obtain a solid therein. The obtained solid was washed with ion exchanged water and was dried in the air at 150 °C for 10 hours to obtain a powder of titanium oxide precursor. The titanium oxide precursor substantially consisted of titanium hydroxide. The thermogravimetry and differential thermal analysis curves thereof are shown in Fig.1. Weight-changing ratio Y plotted as ordinate is a value which is represented by the following formula (4) below:

$$Y = ( W - W_0 ) \div W_0 \times 100 \tag{4}$$

wherein $W_0$ is the weight of the sample subjected to the thermogravimetry and differential thermal analysis, and W is the weight of the sample at each temperature. Therefore, weight-decreasing ratio X represented by the above-mentioned formula (3) is calculated by the following formula (5):

$$X = Y_2 - Y_1 \tag{5}$$

wherein $Y_1$ represents the weight-changing ratio at the temperature at which a maximum exothermic peak is shown in the differential thermal analysis curve, and $Y_2$ represents the weight-changing ratio at the temperature lower by 20 °C than such a temperature showing the maximum exothermic peak. In Fig. 1, arrow A points out the location where a maximum exothermic peak is observed. Crystallinity of the above-obtained powder of titanium oxide precursor, the temperature at which a maximum exothermic peak is shown in the differential thermal analysis curve, a weight-decrease ratio* at which a maximum exothermic peak is shown and a BET specific surface area are shown in Table 1.

\* The weight-decrease ratio can be calculated as a difference between a weight-changing ratio [% by weight] at the temperature at which the maximum exothermic peak is shown and a weight-changing ratio [% by weight] at the temperature lower by 20 °C than the above temperature showing the maximum exothermic peak.

The differential thermal mass spectrum of the powder was measured, to identify the substance which have been emitted at the temperature at which the maximum exothermic peak was observed. The measurement shows that m (mass number) / e (electric charge) of the emitted substance is 28, which indicates that nitrogen molecules have been emitted from the titanium oxide precursor powder.

Preparation of titanium oxide:

The above-obtained titanium oxide precursor was calcined in air at a temperature of 370 °C for 1 hour and then was followed by cooling to a room temperature, to obtain a particulate titanium oxide. The main crystal phase of the titanium oxide was anatase form, and the water content of the titanium oxide was 15 % by weight.

Evaluation of titanium oxide:

An oxalic acid dihydrate (special grade, manufactured by Wako Pure Chemical Industries, Ltd.) (110.5 g) was dissolved in an ion exchanged water (2690 g). The obtained aqueous solution of oxalic acid was mixed with the above-obtained particulate titanium oxide (670 g). The resulting mixture was fed into a medium stirrer-type dispersion machine (trade name: Dyno-mill KDL-PILOT A type, manufactured by Shinmaru Enterprises Corporation) and was subjected to disperse treatment under the condition of medium: 4.2 kg of zirconia beads having diameter of 0.3 mm, stirring rate: peripheral rate of 8 m/sec, treatment time: 51 min, to obtain a dispersion mixture. The dispersibility was evaluated by measuring a particle size of the titanium oxide in the dispersion mixteure. When the particle size is small, the particle has good dispersion properties. The average particle size of the titanium oxide was 0.15 μm, and the titanium oxide was well dispersed in the mixture. Furthermore, the particulate titanium oxide showed a high photocatalytic activity by irradiation of a visible light.

Comparative Example 1

An ion exchange water (4700 g) was fed into a reaction vessel which was the same type of vessel as that used in preparation of titanium oxide precursor in Example 1. An aqueous titanium oxysulfate solution was prepared in the same manner as in Example 1 and was added to the reaction vessel at a rate of 50.6 ml/min, while stirring at 145 rpm, to react with the aqueous ammonium which was supplied to the reaction vessel by the pH controller of which pH value was set to be 4. The reaction temperature at that time was in a range of from 25 °C to 47 °C. The obtained reaction mixture was maintained for 1 hour with stirring, and then was supplied with a 25 % by weight of aqueous ammonia (special grade, manufactured by Wako Pure Chemical Industries, Ltd.) to obtain a slurry. The total amount of the aqueous ammonia supplied to the reaction vessel was 3746 g, which was twice as much as the amount required to convert the titanium oxysulfate into a titanium hydroxide. The slurry was filtered to obtain a solid therein. The obtained solid was washed with ion exchanged water and was dried in the air at 150 °C for 10 hours to obtain a powder of titanium oxide precursor. The titanium oxide precursor substantially consisted of titanium hydroxide. The thermogravimetry and differential thermal analysis curves thereof are shown in Fig. 2. In Fig. 2, arrow B points out the location where a maximum exothermic peak is observed. The phisical properties of the obtained titanium oxide precursor are shown in Table 1.

The above-obtained titanium oxide precursor was calcined in air at a temperature of 425 °C for 1 hour and then was followed by cooling to a room temperature, to obtain a particle titanium oxide. The main crystal phase of the titanium oxide was anatase form, and the water content of the titanium oxide was 15 % by weight.

The particulate titanium oxide was evaluated under the same conditions as those for evaluation of titanium oxide in Example 1. The average particle size of the titanium oxide in the dispersion mixture was 0.92 μm.

Table 1

| | Example 1 | Comparative Example 1 |
|---|---|---|
| Crystallinity | Amorphous | Amorphous |
| Temperature (°C) at which a maximum exothermic peak of a differential thermal analysis curve is observed | 439.8 | 414.4 |
| Decrease (% by weight) in weight at the maximum exothermic peak | 1.2 | < 0.1 |
| BET specific surface area (m$^2$/g) | 13 | 326 |

**Claims**

1. A titanium oxide precursor which is an oxygen-atom-containing titanium compound other than anatase-form titanium oxide, and has a maximum exothermic peak at a temperature in the range of from about 30°C to about 500°C in a differential thermal analysis curve and shows decrease in weight in a thermogravimetry curve at about the same temperature at which the maximum exothermic peak is shown in the differential thermal analysis curve when subjected to a thermogravimetry and differential thermal analysis under the condition of a temperature rising rate of 20°C/min.

2. A titanium oxide precursor according to claim 1, wherein the oxygen-containing titanium compound is a titanium hydroxide or a titanium peroxide.

3. A titanium oxide precursor according to claim 1 or 2, which has a weight-decreasing ratio X calculated by the equation:

$$X = (W_2 - W_1) \div W_0 \times 100$$

of from about 0.5% by weight to about 5% by weight, wherein $W_0$ is the weight of the titanium oxide precursor before being heated in the thermogravimetry and differential thermal analysis, $W_1$ is the weight of the precursor at the temperature showing the maximum exothermic peak in the differential thermal analysis curve and $W_2$ is the weight of the precursor at a temperature lower by 20°C than the temperature showing the maximum exothermic peak.

4. A titanium oxide precursor according to any one of claims 1 to 3, which comprises nitrogen element and which emits nitrogen molecules at the temperature at which the maximum exothermic peak is observed in the differential thermal analysis curve when the precursor is subjected to the thermogravimetry and differential thermal analysis.

5. A titanium oxide precursor according to any one of claims 1 to 4, which has a BET specific surface area of about 100 m$^2$/g or smaller.

6. A titanium oxide precursor according to any one of claims 1 to 5, which is mainly composed of an amorphous oxygen-containing titanium compound.

7. A method for producing a titanium oxide precursor, the method comprising the steps of mixing a titanium compound with hydrogen peroxide and adding a base to the resulting mixture at a temperature of about 80°C or lower to hydrolyze the titanium compound.

8. A method according to claim 7, wherein the titanium compound is selected from a titanium chloride, a titanium oxychloride, a titanium sulfate and a titanium oxysulfate.

9.  A method according to claim 7 or 8, wherein the molar amount of hydrogen peroxide is from about 0.1 to 5 times the molar amount of titanium contained in the titanium compound.

10. A method for producing a titanium oxide, the method comprising the step of calcining a titanium oxide precursor according to any one of claims 1 to 6.

11. A method according to claim 10, wherein the titanium oxide precursor is washed prior to the calcining.

12. A method according to claim 11, wherein the washed titanium oxide precursor is dried at a temperature of from about 10°C to about 200°C prior to the calcining.

## Fig. 1

## Fig. 2